# EUROPÄISCHE PATENTSCHRIFT

(11) **EP 0 702 607 B1**
(45) Veröffentlichungstag und Bekanntmachung des Hinweises auf die Patenterteilung: **20.11.1996**
(21) Anmeldenummer: 94920941.5
(22) Anmeldetag: 16.06.1994
(51) Int. Cl.: B21J 15/50, B21J 15/18, F16B 5/04, B62D 27/02

(54) **VORRICHTUNG UND VERFAHREN ZUR VERBINDUNG VON FAHRZEUGKAROSSERIETEILEN AUS LEICHTMETALL**
DEVICE AND PROCESS FOR BONDING LIGHT-METAL VEHICLE COACHWORK COMPONENTS
DISPOSITIF ET PROCEDE D'ASSEMBLAGE D'ELEMENTS DE CARROSSERIE AUTOMOBILES EN METAL LEGER

(30) Priorität: 17.06.1993 DE 4320068
(43) Veröffentlichungstag der Anmeldung: 27.03.1996
(73) Patentinhaber: AUDI AG, 85045 Ingolstadt (DE)
(72) Erfinder: BORA, Viorel, D-74076 Heilbronn (DE)
(86) Internationale Anmeldenummer: EP9401955
(87) Internationale Veröffentlichungsnummer: WO9500269

(56) Entgegenhaltungen:
- DE-A- 3 323 318
- FR-A- 664 199
- FR-A- 782 335
- NL-A- 57 311
- US-A- 4 365 401

## Beschreibung

Die Erfindung bezieht sich auf eine Vorrichtung und ein Verfahren zur Verbindung von Fahrzeugkarosserieteilen aus Leichtmetall, die aufeinander liegen und durch Nieten miteinander zu verbinden sind.

Gegenwärtig gewinnen kombinierte Fügeverbindungen immer mehr an Bedeutung. Bei Leichtbaukonstruktionen setzen sich die Kombinationen Kleben und Stanznieten, Kleben und Durchsetzfügen und Kleben und konventionelles Nieten immer mehr durch (vgl. Tagung Wärmearme Fügetechniken - Kleben, Druchsetzfügen, Nieten - 5. - 6. Mai 1993, Seite 18 und 19, herausgegeben vom Freundeskreis des Laboratoriums für Werkstoff- und Fügetechnik der Universität - GH - Paderborn e. V.). Das konventionelle Nietverfahren weist jedoch den Nachteil auf, daß eine Reihe von Arbeitsgängen zur Herstellung der Nietverbindung erforderlich sind. In einem ersten Arbeitsgang müssen die zu verbindenden Leichtmetall-Teile passend aufeinandergelegt werden, und in einem zweiten Arbeitsgang müssen die beiden Leichtmetall-Teile durchbohrt werden. In einem dritten Arbeitsgang werden die Bohrungen auf einer Seite abgesenkt um an den Verbindungsstellen glatte Flächen zu erhalten. Schließlich werden die beiden Leichtmetall-Teile in einem vierten Arbeitsgang miteinander vernietet. Ein Absenken im Bereich der Bohrungen während des Herstellens der Bohrungen ist bereits in der NL-A 57 311 beschrieben.

Zunehmend ist man dazu übergegangen, konventionelle Nietverfahren durch Stanzniet-Verfahren zu ersetzen. Insbesondere bei der Reparatur von Karosserieschäden besteht das Bedürfnis, das aus mehreren Arbeitsgängen bestehende konventionelle Nietverfahren durch ein einfacheres und kostengünstigeres Verfahren zu ersetzen.

Wenn ein Fahrzeug mit einer Leichtmetall-Karosserie einen Karosserieschaden erlitten hat und Teile ausgetauscht werden müsse, ist es erforderlich, die Stanzniete zu entfernen. Man könnte mittels einer Schleifmaschine die Enden der Stanznieten abschleifen und anschließend die Stanzniete herausschlagen. Eine andere theoretische Möglichkeit besteht darin, die Stanznieten herauszubohren. Derartige, bei der Trennung von Stahlblechen, die durch Nieten zusammengehalten sind, übliche Verfahren sind bei Leichtmetall-Karosserien nicht verwendbar, da durch das Abschleifen oder Bohren der Stanznieten Stahlspäne entstehen, die eine Kontaktkorrosion zur Folge haben.

Ein spanloses Entfernen und Ersetzen konventioneller Nieten ist, ohne Bezugnahme zum Anwendungsfall der vorliegenden Erfindung, bereits in der US-A 4,365,401 beschrieben. Dabei drückt ein Stößel eines Nietapparates ein Niet aus den Nietaufnahmebohrungen der miteinander verbundenen Bleche heraus, wobei das Niet zerstört wird und in eine Aufnahmebohrung des Nietapparates gelangt.

Das Ziel der Erfindung ist es, ein Verfahren und eine Vorrichtung zu schaffen, mit dem bzw. der das Auswechseln von beschädigten Karsserieteilen, die durch Stanzniete an anderen Fahrzeugteilen befestigt sind, vereinfachen und gleichzeitig gewährleistet ist, daß die Gefahr einer Kontaktkorrosion durch Stahlspäne nicht besteht. Dieses Ziel wird erfindungsgemäß durch das in Anspruch 1 angegebene Verfahren und die Vorrichtung gemäß Anspruch 2 gelöst.

Das erfindungsgemäße Verfahren hat gegenüber bekannter Verfahren den Vorteil, daß das Lochen der Leichtmetallteile, das Absenken des oberen Lochrands und das Eindrücken des unteren Lochrands des aufliegenden Teils in das andere zu verbindende Teil in einem einzigen Arbeitsgang durchgeführt werden.

Das in Anspruch 1 angegebene Verfahren ermöglicht die Durchführung einer Reparatur. Durch Anwendung des Verfahrens nach Anspruch 1 können auf einfache Weise zwei mittels Stanznieten verbundene Leichtmetall-Teile voneinander getrennt und anschließend wieder miteinander verbunden werden.

Bei dem Reparaturverfahren gemäß Anspruch 1 wird der Stanzniet ohne spanabhebende Verformung aus dem unbeschädigten Karosserieteil herausgedrückt, so daß keine Stahlspäne entstehen können, die zu der erwähnten Kontaktkorrosion führen können. Nach dem Rückformen der durch die Stanzniete verursachten Ausprägungen und nach Anpassung eines dem auszuwechselnden Teil entsprechenden Neuteiles wird nun in einem Arbeitsgang vorzugsweise an den Stellen, an denen sich in dem anderen Teil ein Stanzniet befand, in den Neuteil und in den anderen Teil ein Loch gestanzt und gleichzeitig eine Warzung für den Nietkopf der im folgenden Verfahrensschritt vorgenommenen Nietverbindung mittels eines Leichtmetall-Vollniets erzeugt. Durch diesen Prägevorgang wird gleichzeitig der Rand des Loches in dem Neuteil in das andere Teil eingedrückt. So läßt sich mit wenigen Verfahrensschritten das Entfernen eines beschädigten Karosserieteils und der Ersatz desselben durch ein Neuteil durchführen, wobei mit Sicherheit die Erzeugung von Stahlspäne vermieden wird.

Die Erfindung betrifft auch eine Vorrichtung zur Durchführung des erfindungsgemäßen Reparaturverfahrens` die durch die im Kennzeichen des Anspruchs 2 angegebenen Merkmale gekennzeichnet ist.

Vorteilhafte Weiterbildungen dieser Vorrichtung sind in den Ansprüchen 5 bis 11 angegeben.
- Fig. 1: zeigt im Schnitt eine Stanznietverbindung zwischen zwei Leichtmetallblechen.
- Fig. 2-6: zeigen die einzelnen Verfahrensschritte von dem Entfernen des Stanzniets bis zum Verbinden eines Neuteils mit dem unbechädigten Teil mittels eines Leichtmetallniets.
- Fig. 7: zeigt in schematischer Darstellung eine Druckluft-Nietpresse, die für die Durchführung des erfindungsgemäßen Verfahrens geeignet ist.
- Fig. 8: zeigt ein Werkzeugpaar für das Herausdrücken des Stanzniets.
- Fig. 9: zeigt ein Werkzeugpaar zum Rückformen der von dem Stanzniet hinterlassenen Ausprägung an dem anderen, nicht beschädigten Teil.
- Fig. 10 a: zeigt ein Werkzeugpaar zum Stanzen eines Loches in dem Neuteil und in dem anderen Teil und zur Erzeugung einer Warzung.

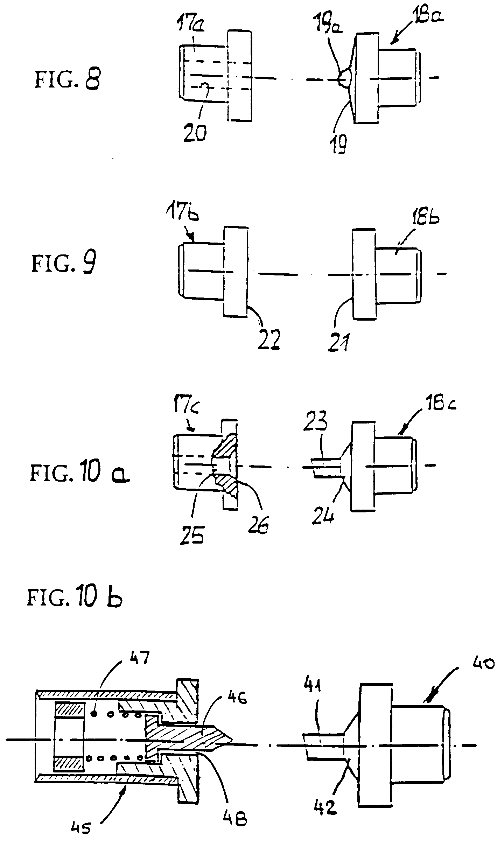

- Fig. 10 b: zeigt ein Werkzeugpaar zum Stanzen eines Loches in die Leichtmetallteile einerseits und zum Fixieren des zu stanzenden Loches andererseits.

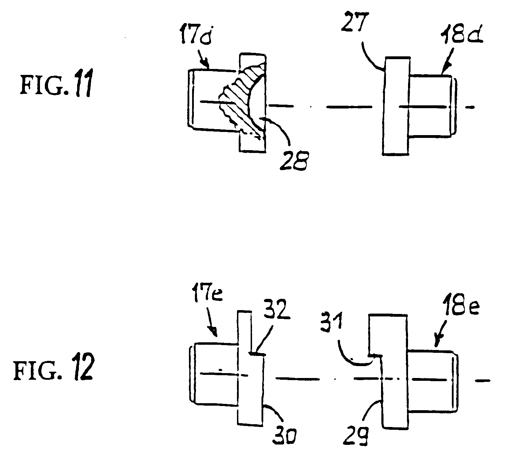

- Fig. 11: zeigt ein Werkzeugpaar zum Nietquetschen des Leichtmetallniets, und
- Fig. 12: zeigt ein Werkzeugpaar zur Erzeugung einer Abstufung am Neuteil oder am anderen unbeschädigten Karosserieteil.

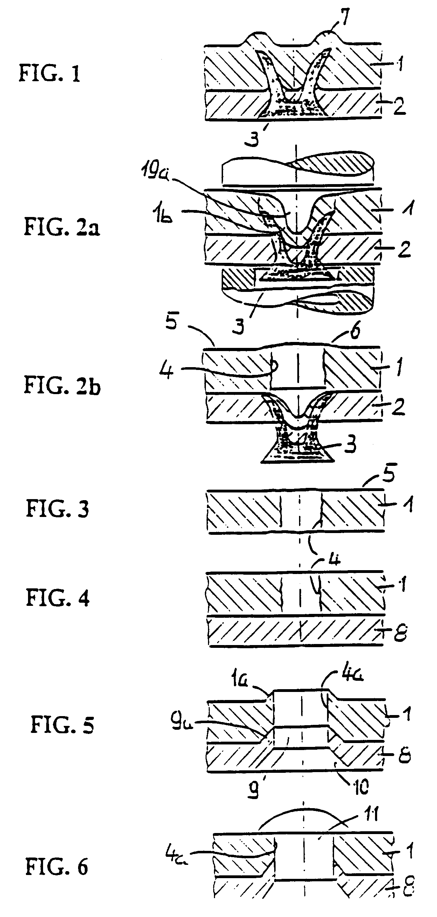

Zunächst werden die in Fig. 10a dargestellten Werkzeugeinsätze näher beschrieben, da diese auch zur Verbindung zweier Neuteile mittels Leichtmetallvollnieten verwendet werden können. Der rechts abgebildete Werkzeugeinsatz ist ein Stanzstempel 18c. Der Stanzstempel 18c weist einen zylindrisch geformten Stanzteil 23 und einen kegelstumpfartig geformten Prägeteil 24 auf. Der links abgebildete Werkzeugeinsatz der Fig. 10a ist ein Gegenhalter 17c zur Aufnahme des Stanzteils 23. Ggf. kann der Gegenhalter eine Ansenkung 26 aufweisen. Mit dem Stanzstempel 18c kann erfindungsgemäß das Lochen der Leichtmetall-Teile mittels des Stanzteils 23, das Prägen einer Absenkung mit dem Prägeteil 24 und das Drücken des unteren Lochrands des aufliegenden Teils in das andere Teil in einem einzigen Arbeitsgang ausgeführt werden. Das mit dieser Vorrichtung erhaltene Verbindungsloch weist die in Fig. 5 gezeigte Form auf.

Mittels der Werkzeugeinsätze aus Fig. 10a kann zum Verbinden von Leichtmetall-Teilen nach in im wesentlichen zwei Verfahrensschritten ausgeführt werden.

Im folgendem wird auf die Fig. 1 - 6 Bezug genommen. In Fig. 1 ist eine Verbindung zwischen einem Aluminiumteil 1 und einem aus Aluminiumblech bestehenden Karosserietiel 2 mittels eines aus Stahl bestehenden Stanzniets 3 dargestellt. Es sei angenommen, daß das Karosserieteil 2 beschädigt ist und durch ein Neuteil ersetzt werden muß. In einem ersten Verfahrensschritt wird das Stanzniet 3, wie in Fig. 2a und 2b dargestellt, aus dem Teil 1 herausgedrückt und das beschädigte Karosserieteil 2 zusammen mit den Stanznieten 3 entfernt. Vorzugsweise wird dieser Vorgang so ausgeführt, daß die Stanznieten 3 in dem Karosserieteil 2 verbleiben, um zu vermeiden, daß einzelne Stanznieten in Karosserie-Hohlräume fallen und Kontaktkorrosion verursachen. Durch das Herausdrücken des Stanzniets 3 entsteht in dem Bauteil 1 ein Loch 4, das auf der freien Oberseite 5 des Bauteils 1 von einem Grat 6 umgeben ist, der von der beim Stanznieten erzeugten Ausprägung 7 (Fig. 1) herrührt. Im nächsten Verfahrensschritt gemäß Fig. 3 wird der Grat 6 zurückgeformt, so daß eine ebene Oberfläche 5 vorliegt. Nun wird gemäß Fig. 4 ein Neuteil 8, welches das beschädigte Karosserieteil 2 ersetzt, an das Bauteil 1 angepaßt und in einem Arbeitsgang ein mit dem Loch 4 fluchtendes Loch 9 in das Neuteil 8 gestanzt, eine Ansenkung 10 auf der Außenseite des Neuteils 8 geprägt und dabei den Rand 9a des Loches 9 in das Bauteil 1 eingedrückt, und das Loch 4 in dem Bauteil 1 zum Loch 4a vergrößert. Dabei entsteht auf der Außenseite des Bauteils 1 ein Wulst 1a. Im letzten Verfahrensschritt gemäß Fig. 6 werden das Bauteil 1 und das Neuteil 8 mittels eines Leichmetall-Vollniets 11 in üblicher Weise miteinander verbunden. Dabei wird der Wulst 1a zurückgeformt und dichtet das Niet 11 in dem Loch 4a ab. Aufgrund der geringeren Festigkeit muß dieses beispielsweise aus AlMgSi bestehenden Niet einen größeren Durchmesser haben als das Stanzniet 3.

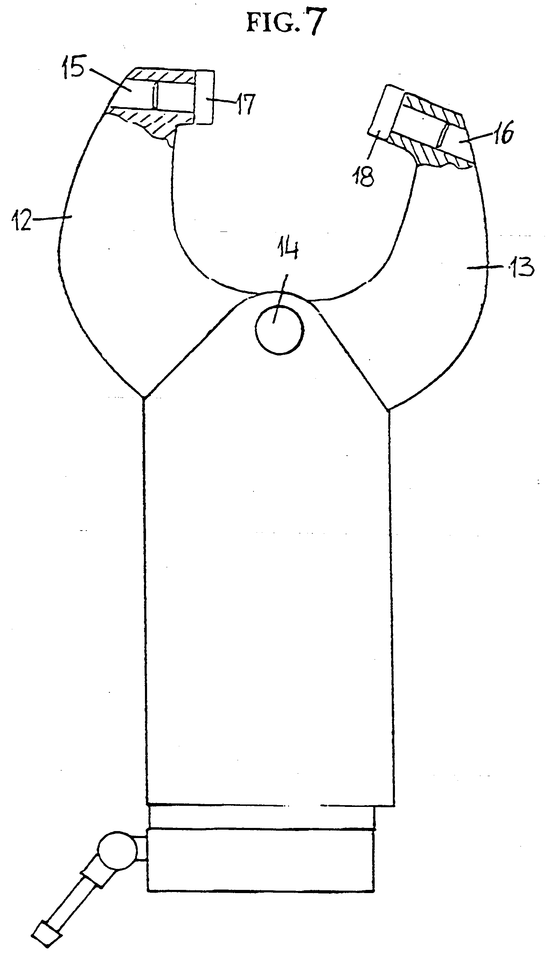

In Fig. 7 ist eine Vorrichtung zur Durchführung der vorstehend beschriebenen Verfahrensschritte dargestellt. Sie weist zwei pneumatisch zusammenspannbare Zangenarme 12 und 13 auf, von denen der Zangenarm 12 feststeht und der Zangenarm 13 um einen Drehzapfen 14 zum ersten Zangenarm hin 12 schwenkbar ist. Die Zangenarme 12,13 weisen an ihren Enden Bohrungen 15,16 auf zur Aufnahme von auswechselbaren Werkzeugeinsätzen 17 und 18, die ein miteinander zusammenwirkendes Werkzeugpaar bilden und von denen das eine einen stempel und das andere einen Gegenhalter darstellt.

Zum Herausdrücken des Stanzniets gemäß Fig. 2a und 2b wird das in Fig. 8 dargestellte Werkzeugpaar verwendet, dessen Stempel 18a eine flache, kegelförmige Grundfläche 19 mit einem Kegelwinkel con ca. 5° und kegelförmige, abgerundete Spitze 19a aufweist, und dessen Gegenhalter 17a mit einer Bohrung 20 versehen ist, deren Durchmesser geringfügig größer ist, als der Durchmesser des Stanzniets 3 (Fig. 2a). Die kegelförmige Spitze 19a drückt das Material 1b des Bauteils 1 in der MItte des Stanzniets 3 zusammen und schiebt diesen, wie in Fig. 2a gezeigt, aus dem Bauteil 1 heraus. Durch die abgerundete Spitze 19a wird das Material 1a stark verdichtet, es wird jedoch keine übermäßige Querkraft auf das Niet ausgeübt, die zu einem Sprengen des Niets führen und zur Folge haben könnte, daß Teile des Niets in dem Loch 4a verbleiben und Kontaktkorrosion erzeugen. Die kegelförmige Spitze 19a hat, wie aus Fig. 2a ersichtlich, ist, eine Form, die dem Innenraum des Stanzniets entspricht, und ein Volumen, das etwa 2/3 des Volumens des Innenraumes beträgt.

Zur Durchführung des in Zusammenhang mit Fig. 3 beschriebenen Verfahrensschrittes wird das Werkezugpaar gemäß Fig. 9 verwendet, dessen Stempel 18b und Gegenhalter 17b einander gegenüberliegende ebene Stirnfläche 21 bzw. 22 aufweisen und damit die Rückform der Ausprägung 6 (Fig. 2b) bewerkstelligen.

Das Werkzeugpaar von Fig. 10 a dient zur Durchführung des in Zusammenhang mit Fig. 5 beschriebenen Verfahrensschrittes. Dabei ist der Stempel 18c mit einem Stanzteil 23 versehen, das die Löcher 4a und 9 erzeugt. Außerdem ist ein Prägeteil 24 vorgesehen, das die Warzung 10 für den Kopf des später zur Verbindung des Bauteile 1 und 8 verwendeten Niets formt und den Rand 9a des Loches 9 in das Bauteil 1 hineindrückt. Der Gegenhalter 17c weist eine Bohrung 25 auf, in welche das Stanzteil 23 nach erfolgtem Stanzen eintaucht, sowie gegebenenfalls eine Ansenkung 26, durch welche der Wulst 1a um das Loch 4a in dem Bauteil 1 herum geformt wird (Fig. 5).

Das in Fig. 10b gezeigte Werkzeugpaar dient ebenfalls zur Durchführung des unter Bezugnahme von Fig. 5 beschriebenen Verfahrensschritts. Der rechte abgebildete Werkzeugiensatz ist ein Stempel 40, der wie Stempel 18c einen Stanzteil 41 und einen Prägeteil 42 aufweist. Der in Fig. 10b links abgebildete Werkzeugeinsatz ist ein Gegenhalter, der sich im wesentlichen vom Gegenhalter 17c in Fig. 10a dadurch unterscheidet, daß in einer Bohrung 48 ein Stift 46 federnd gelagert ist. Ein Federelement 47 drückt den Stift 46 nach vorne und bewirkt, daß der Stift 46 in das Loch 4 in dem am Fahrzeugverbleibenden Leichtmetall-Teil 1(vgl. Fig. 4) gleiten kann. Durch das Gleiten des Stifts in das Loch 1 wird die Position des in das Neuteil zu stanzenden Loches genau fixiert. Eine Übertragung des auf der Rückseite der Verbindungsstelle befindlichen Loches auf die Vorderseite des Neuteils entfällt. Diese Übertragung wurde bisher mit Hilfe eines Werkzeugs ausgeführt, das zur Übertrgung der Lochposition von hinten nach vorne mit zwei Spitzen versehen ist.

Durch das Werkzeugpaar in Fig. 10b wird der Arbeitsgang der Übertragung eingespart.

Das Werkzeugpaar gemäß Fig. 11 dient zur Herstellung der Nietverbindung gemäß Fig. 6, wobei der Stempel 18d eine ebene Stirnfläche 27 aufweist, die auf dem ebenen Kopf des Niets 11 zu liegen kommt, während der Gegenhalter 17d in seiner gegenüberliegenden Stirnfläche eine Vertiefung 28 zur Formung des Nietkopfes am anderen Ende des Niets aufweist. Die Stirnfläche des Gegenhalters formt den Wulst 1a (Fig. 5) zurück, wodurch das Niet 11 in dem Loch 4a abgedichtet wird.

In manchen Fällen ist es erforderlich das Neuteil 8 oder auch das Bauteil 1 mit einer Abstufung zu versehen, wenn nur die Ränder dieser Bauteile übereinander liegen, die Oberflächen der bauteile jedoch fluchten müssen. Die in Fig. 7 gezeigte Vorrichtung kann zur Herstellung einer derartigen Abstufung verwendet werden, indem das Werkzeugpaar gemäß Fig. 12 benutzt wird, deren Stirnflächen 29 und 30 mit entsprechenden, miteinander zusammenwirkenden Abstufung 31,32 versehen sind.

Die Bauteile 1 und 2 sind außer durch Stanznieten in der Regel durch einen Kleber miteinander verbunden. Dieser Kleber löst sich unter Druck beim Herausdrücken des Stanzneits gemäß Fig. 2a zumindest in diesem Bereich.

An anderen Stellen könnte das Lösen des Klebers durch Zusammendrücken der Bauteile mittels des Werkzeugpaares von Fig. 9 bewirkt werden.

Zur Beschleunigung des Werkzeugwechsels können alle oder ein Teil der Stempel 18a bis 18e über den Umfang verteilt in einem ersten drehbaren Werkzeughalter und alle oder ein Teil der Gegenhalters 17a bis 17e über den Umfang verteilt in einem zweiten drehbaren Werkzeughalter angeordnet werden, die drehbar am Zangenarm 12 bzw. 13 angebracht sind.

Es sei erwähnt, daß die Verfahrensschritte d) und e) gemäß Fig. 5 und 6 und die entsprechenden, in Fig. 10 und 11 dargestellten Werkzeugpaare, auch zur Verbindung von Leichtmetall-Neuteilen angewandt werden können.

## Patentansprüche

1. Verfahren zur Reparatur von Fahrzeug-Karosserien aus Leichtmetall-Teilen, die aufeinanderliegen und durch aus Stahl bestehende Stanzniete miteinander verbunden sind, bei dem
a) die das auszuwechselnde Teil mit einem anderen Teil verbindenden Stanznieten aus dem anderen Teil so herausgedrückt werden, daß sie auf dem auszuwechselnden Teil verbleiben und zusammen mit dem auszuwechselnden Teil entfernt werden.
b) die durch die Stanzniete an der freien Oberfläche des anderen Teils entstandenen Ausprägungen rückgeformt werden,
c) ein dem auszuwechselnden Teil entsprechendes Neuteil an das andere Teil angepaßt wird,
d) in einem Arbeitsgang in das Neuteil und in das andere Teil vorzugsweise an den Stellen, an denen in dem anderen Teil ein Stanzniet vorhanden war, ein Loch gestanzt, durch Warzen das Loch in dem Neuteil auf der freien Seite mit einer Ansenkung für einen Nietkopf versehen und der Rand dieses Loches in das andere Teil eingedrückt wird und schließlich
e) das Neuteil mit dem anderen Teil mittels Leichtmetallnieten verbunden werden, die sich durch die gestanzten Löcher in dem Neuteil und in dem anderen Teil erstrecken.

2. Vorrichtung zur Reparatur von Fahrzeug-Karosserien aus Leichtmetall-Teilen, die aufeinanderliegen und durch aus Stahl bestehende Stanznieten miteinander verbunden sind, gemäß dem Verfahren nach Anspruch 1, mit zwei pneumatisch zusammenspannbaren Zangenarmen (12,13), die auswechselbare und miteinander zusammenwirkende Werkzeugeinsätze (17,18) tragen, und zwar
zur Durchführung des Verfahrensschrittes a) einen Stempeleinsatz (18a) mit einer im wesentlichen kegelförmigen Spitze (19a) und einen Gegenhalter (17a) mit einem Loch (20), dessen Durchmesser dem Durchmesser des Stanzniets (3) entspricht,
zur Durchführung des Verfahrensschrittes b) einen Stempeleinsatz (18b) und einen Gegenhalter (17b) jeweils mit einer ebenen Stirnfläche (21 bzw. 22),
zur Durchführung des Verfahrensschrittes d) einen Stempeleinsatz (18c), der mit einem Stanzteil (23) zum Stanzen des Loches (4a) in dem anderen Teil (1) und des Loches (9) im Neuteil (8) und mit einem Prägeteil (24) zur Erzeugung der Ansenkung (10) für den Nietkopf und zum Hindrücken des Randes (9a) des Loches (9) in dem Neuteil (8) in das andere Teil (1) versehen ist, und einen Gegenhalter (17c) mit einer Bohrung (25), deren Durchmesser dem Durchmesser des Stanzteils (23) entspricht, und
zur Durchführung des Verfahrensschrittes e) ein Nietquetschwerkzeug (17d) und einen Gegenhalter (18d) mit ebener Stirnfläche (27).

3. Vorrichtung nach Anspruch 2, dadurch gekennzeichnet, daß die kegelförmige Spitze (19a) des Stempeleinsatzes (18a) eine Form hat, die dem Innenraum des Stanzniets (3) entspricht, und ein Volumen, das etwa 2/3 des Volumens des Innenraumes des Stanzniets beträgt.

4. Vorrichtung nach Anspruch 2, dadurch gekennzeichnet, daß innerhalb der Bohrung (48) des Gegenhalters (45) ein Stift (46) federnd gelagert ist und daß der Stift zur Positionierung durch das Federelement (47) in das bereits vorhandene Loch im andern Teil gedrückt wird.

5. Vorrichtung nach Anspruch 2, dadurch gekennzeichnet, daß der Gegenhalter (17c) für den Verfahrensschritt d) eine die Bohrung (25) umgebenden Ansenkung (26) aufweist.

6. Vorrichtung nach Anspruch 2, dadurch gekennzeichnet, daß der zur Durchführung des Verfahrensschrittes a) bestimmte Stempeleinsatz (18a) eine flache kegelförmige Grundfläche (33) aufweist, aus deren Mitte sich die kegelförmige Spitze (19) erstreckt.

7. Vorrichtung nach Anspruch 6, dadurch gekennzeichnet, daß die kegelförmige Grundfläche (33) einen Kegelwinkel von etwa 5° bis 7° aufweist.

8. Vorrichtung nach Anspruch 2 gekennzeichnet durch ein weiteres Werkzeugpaar (17e,18e) zur Erzeugung einer Abstufung des Neuteils (8) oder des anderen Teils (1).

9. Vorrichtung nach Anspruch 2, dadurch gekennzeichnet, daß die Stempeleinsätze (18) und die Gegenhalter (17) aller Werkzeug-Paare jeweils in einem Werkzeughalter angeordnet sind, und der eine Werkzeughalter drehbar an dem einem Zangenarm und der andere Werkzeughalter drehbar an dem anderen Zangenarm angebracht ist.

10. Verfahren nach Anspruch 1, dadurch gekennzeichnet, daß dem Schritt des Anpassens des Neuteils ein Schritt vorausgeht, in dem ein Klebstoff auf eines der zu verbindenden Leichtmetall-Teile aufgetragen wird.

## Claims

1. Process for the repair of vehicle coachwork made of light metal components that are superposed and connected together by punch rivets consisting of steel, in which:
a) the punch rivets connecting the component to be exchanged to the other component, are pressed out from the other component so that they remain on the component to be exchanged and are removed together with the component to be exchanged,
b) the protuberances produced on the free surface of the other component by the punch rivets are pushed back,
c) a new component corresponding to the component to be exchanged is fitted to the other component,
d) in one operation, a hole is punched in the new component and in the other component preferably at the locations where a punch rivet was present in the other component, the hole in the new component is provided by means of projections with a countersink at its free side for a rivet head and the rim of this hole is pressed into the other component, and, finally,
e) the new component is connected to the other component by means of light metal rivets which extend through the holes punched in the new component and in the other component.

2. Device for the repair, according to the process of claim 1, of vehicle coachwork made of light metal components that are superposed and connected together by punch rivets consisting of steel, having two tong arms (12,13) which can be pressed together pneumatically and which carry interchangeable mutually co-operating tool inserts (17,18), namely:
to carry out process step a), a male die insert (18a) having an essentially conical point (19a), and a hold-on (17a) having a hole (20) whose diameter corresponds to the diameter of the punch rivet (3),
to carry out process step b), a male die insert (18b) and a hold-on (17b) each with a flat end face (21 or 22),
to carry out process step d), a male die insert (18c) which is provided with a punch component (23) for punching out the hole (4a) in the other component (1) and the hole (9) in the new component (8) and with an embossing component (24) for producing the countersink (10) for the rivet head and for pressing the rim (9a) of the hole (9) of the new component (8) into the other component (1), and a hold-on (17c) with a bore (25) whose diameter corresponds to the diameter of the punch component (23), and,
to carry out process step e), a rivet buster tool (17d) and a hold-on (18d) with a flat end face (27).

3. Device according to claim 2, characterised in that the conical point (19a) of the male die insert (18a) is of a shape that corresponds to the hollow of the punch rivet (3) and has a volume amounting to about 2/3 of the volume of the hollow of the punch rivet.

4. Device according to claim 2, characterised in that a peg (46) is spring mounted in the bore (48) of the hold-on (45) and that the peg is pressed by the spring element (47) into the already existing hole in the other component for locating purposes.

5. Device according to claim 2, characterised in that the hold-on (17c) for process step d) has a countersink (26) surrounding the bore (25).

6. Device according to claim 2, characterised in that the male die insert (18a) intended for carrying out process step a) has a flat conical base surface (33), the conical point (19) extending from its centre.

7. Device according to claim 6, characterised in that the conical base surface (33) has a cone angle of about 5° to 7°.

8. Device according to claim 2, characterised by a further pair of tools (17e,18e) to produce a step in the new component (8) or in the other component (1).

9. Device according to claim 2, characterised in that the male die inserts (18) and the hold-ons (17) of all pairs of tools are respectively arranged in respective tool holders, one tool holder being rotatably arranged on one tong arm and the other tool holder being rotatably arranged on the other tong arm.

10. Device according to claim 1, characterised in that the step of fitting the new component is preceded by a step in which adhesive is applied to one of the light metal components that are to be connected.

## Revendications

1. Procédé de réparation de carrosseries d'automobiles faites de pièces en métal léger qui sont posées l'une sur l'autre et assemblées par des rivets estampés en acier, dans lequel
a) les rivets estampés qui joignent la pièce à remplacer à une autre pièce sont chassés de l'autre pièce, de sorte qu'ils restent sur la pièce à remplacer et qu'ils soient enlevés en même temps que la pièce à remplacer,
b) les empreintes formées par les rivets estampés sur la surface libre de l'autre pièce sont aplanies,
c) une pièce neuve correspondant à la pièce à remplacer est adaptée à l'autre pièce,
d) en une seule opération, un trou est poinçonné dans la pièce neuve et dans l'autre pièce, de préférence aux endroits où un rivet estampé était présent dans l'autre pièce, le trou dans la pièce neuve est muni par emboutissage, du côté libre, d'un logement pour une tête de rivet et le bord de ce trou est enfoncé dans l'autre pièce, et enfin
e) la pièce neuve est jointe à l'autre pièce au moyen de rivets en métal léger qui s'étendent à travers les trous poinçonnés dans la pièce neuve et dans l'autre pièce.

2. Dispositif pour la réparation de carrosseries d'automobiles faites de pièces en métal léger qui sont posées l'une sur l'autre et assemblées par des rivets estampés en acier, selon le procédé de la revendication 1, comprenant deux mâchoires de pince (12,13) qui peuvent être serrées pneumatiquement l'une contre l'autre et qui portent des outils rapportés (17,18) qui sont interchangeables et coopèrent entre eux, à savoir:
pour l'exécution de l'étape a) du procédé, un poinçon rapporté (18a) comportant une pointe essentiellement conique (19a), et un contre-rivoir (17a) muni d'un trou (20) dont le diamètre correspond à celui du rivet estampé (3),
pour l'exécution de l'étape b) du procédé, un poinçon rapporté (18b) et un contre-rivoir (17b) présentant l'un et l'autre une surface frontale plane (21,22),
pour l'exécution de l'étape d) du procédé, un poinçon rapporté (18c) qui est muni d'une partie poinçonneuse (23) pour le poinçonnage du trou (4a) dans l'autre pièce (1) et du trou (9) dans la pièce neuve (8), ainsi que d'une partie emboutisseuse (24) pour la formation du logement (10) pour la tête du rivet et pour l'enfoncement du bord (9a) du trou (9) de la pièce neuve (8) dans l'autre pièce (1), et un contre-rivoir (17c) comportant une forure (25) dont le diamètre correspond à celui de la partie poinçonneuse (23), et
pour l'exécution de l'étape e) du procédé, un outil (17d) d'écrasement du rivet et un contre-rivoir (18d) à surface frontale plane (27),

3. Dispositif selon la revendication 2, caractérisé en ce que la pointe conique (19a) du poinçon rapporté (18a) a une forme qui correspond à la cavité intérieure du rivet estampé (3) et un volume qui s'élève aux 2/3 environ du volume de la cavité intérieure du rivet estampé.

4. Dispositif selon la revendication 2, caractérisé en ce qu'une broche (46) est montée à ressort dans la forure (48) du contre-rivoir (45) et en ce que la broche est pressée par l'élément à ressort (47), à des fins de positionnement, dans le trou déjà existant dans l'autre pièce.

5. Dispositif selon la revendication 2, caractérisé en ce que le contre-rivoir (17c) pour l'étape d) du procédé présente une fraisure (26) qui entoure la forure (25).

6. Dispositif selon la revendication 2, caractérisé en ce que le poinçon rapporté (18a) destiné à l'exécution de l'étape a) du procédé présente une surface de base conique aplatie (19), à partir du centre de laquelle s'étend la pointe conique (19a).

7. Dispositif selon la revendication 6, caractérisé en ce que la surface de base conique (19) présente un angle de cône d'environ 5 à 7°.

8. Dispositif selon la revendication 2, caractérisé par une paire d'outils supplémentaire (17e,18e) pour la formation d'un gradin dans la pièce neuve (8) ou dans l'autre pièce (1).

9. Dispositif selon la revendication 2, caractérisé en ce que les poinçons rapportés (18) et les contre-rivoirs (17) de toutes les paires d'outils sont disposés chacun dans un porte-outil, et en ce que l'un des porte-outil est monté à rotation sur l'une des mâchoires de la pince et l'autre porte-outil est monté à rotation sur l'autre mâchoire de la pince.

10. Procédé selon la revendication 1, caractérisé en ce que l'étape de l'adaptation de la pièce neuve est précédée d'une étape dans laquelle une colle est appliquée sur l'une des pièces en métal léger à assembler.
